# EUROPÄISCHE PATENTSCHRIFT

(11) **EP 2 895 744 B1**
(45) Veröffentlichungstag und Bekanntmachung des Hinweises auf die Patenterteilung: **24.08.2016**
(21) Anmeldenummer: 13789166.9
(22) Anmeldetag: 11.09.2013
(51) Int. Cl.: F04B 11/00, F04B 23/06, F04B 37/12, G01N 30/02, G01N 30/32, G01N 30/34, G01N 30/36

(54) **SPRITZENPUMPENSYSTEM FÜR EIN PULSATIONSFREIES DOSIEREN UND GENAUES MISCHEN IN DER HPLC, UHPLC, NANO- UND MIKRO-HPLC**
SYRINGE PUMP FOR PULSATION FREE DOSING AND PRECISE MIXING IN HPLC, UHPLC, MICRO- AND NANO-HPLC
POMPE SYRINGE POUR UN DOSAGE SANS PULSATIONS ET UN MÉLANGE PRÉCIS DANS LE DOMAINE HPLC, UHPLC, MICRO- ET NANO-HPLC

(30) Priorität: 11.09.2012 CH 16532012
(43) Veröffentlichungstag der Anmeldung: 22.07.2015
(73) Patentinhaber: Döbelin, Werner, 4153 Reinach BL (CH)
(72) Erfinder: Döbelin, Werner, 4153 Reinach BL (CH)
(74) Vertreter: Wüstefeld, Regine Marie
(86) Internationale Anmeldenummer: PCT/EP2013/002728
(87) Internationale Veröffentlichungsnummer: WO 2014/040727

(56) Entgegenhaltungen:
- EP-A1- 0 709 572
- EP-A1- 1 524 520
- WO-A2-2011/151083
- US-A- 4 255 088
- US-A- 4 753 581
- US-A- 4 915 591
- US-A- 5 637 208
- US-A1- 2005 214 130

## Beschreibung

Die Erfindung betrifft ein Spritzenpumpensystem im Bereich der HPLC, der UHPLC sowie der Nano- und Mikro-HPLC für das pulsationsfreie Fördern und genaue Mischen von Lösungsmitteln und ein Verfahren, um Mischungsverhältnisse von unterschiedlichen Lösungsmitteln mit unterschiedlichen Kompressibilitäten auch bei sehr hohem Druck schnell einzustellen, die Wiederhol-Genauigkeit von Gradienten und das Handling zu verbessert und neue Verwendungen zu ermöglichen.

In der HPLC geht der Trend zu immer größerem Probendurchsatz bei immer kleineren Probenvolumina. Unter der "Ultra High Performance Liquid Chromatography" (UHPLC) versteht man entsprechend eine HPLC mit stark gesteigerter Leistung. Die Reduktion des Säulendurchmessers ging in ihrer Entwicklung noch weiter und hat darüber hinaus zur Entwicklung der Nano- und Mikro-HPLC geführt.
Für das Fördern von Lösungsmitteln im Bereich der HPLC, der UHPLC sowie der Nano- und Mikro-HPLC werden seit langem große Anstrengungen unternommen, um mit möglichst geringem Aufwand exakte und reproduzierbare Resultate zu erzielen.

Herkömmliche Pumpensysteme für den Bereich der HPLC, der UHPLC sowie der Nano- und Mikro-HPLC sind sehr aufwendig und meist für die Dauerförderung gebaut. Sie benötigen daher spezielle Vorkehrungen um die Pulsation, welche von den Pumpenkolbenbewegungen verursacht werden, zu dämpfen. Bei solchen Pulsationen handelt es sich um Abweichungen von dem mittleren Druckfluß, die zu Druckschwankungen in dem HPLC-System führen. Insbesondere bei der Nano- und Mikro-HPLC können schon kleine Druckschwankungen erhebliche Fehler verursachen.
Außerdem hat speziell bei kleinen Flußraten von wenigen nl/min bis zu 5 ml/min und hohen Drücken bis über 1000 bar die unterschiedliche Kompressibilität von verwendeten, voneinander unterschiedlichen Lösungsmitteln oder von Lösungsmitteln mit unterschiedlicher Gassättigung einen direkten Einfluß auf die Mischgenauigkeit und die Zeit welche für die Systemequilibrierung benötigt wird.

Herkömmliche Spritzenpumpen sind meist nicht für den Gradientenbetrieb, kleine Flußraten und für hohe Drücke gebaut. Die Kompressibilität der Lösungsmittel und die Mischgenauigkeit werden daher nicht oder nur sehr ungenügend berücksichtigt.

Bei der Gradienten-Elution mit einem Hochdruckgradienten werden in der Regel zumindest zwei Pumpen verwendet. Bei dem Gradientendesign spielt die Art der gewählten Lösungsmittel für die Mischgenauigkeit eine große Rolle. Werden beispielsweise Methanol-Wasser-Gemische verwendet, ist schon die Mischungsreaktion stark exotherm. Es tritt eine Volumenverminderung und eine Viskositätserhöhung und Druckerhöhung ein.
Bei einem anderen Gradientendesign, wie z.B. Acetonitril und Wasser, sind solche Auswirkungen weniger stark vorhanden und damit weniger gravierend.
An das Pumpensystem werden somit hohe Anforderungen gestellt. So sollte eine konstante und reproduzierbare Fließgeschwindigkeit gewährleistet werden, weil davon die Reproduzierbarkeit der Messung abhängig ist. Es muß außerdem ein möglichst pulsationsfreier Fluß gewährleistet sein. Druckstöße könnten sogar die stationäre Phase schädigen.

Bei herkömmlichen Systemen kann die dargestellte Problematik nicht oder nur unzureichend aufgefangen und berücksichtigt werden.

So wird beispielsweise durch die US 5,637,208 A ein Spritzenpumpensystem für die HPLC offenbart, das für HPLC-Analysen im Gradientenbetrieb eingesetzt werden kann und aus zwei Pumpeneinheiten besteht, welche die Aufgabe haben, jeweils Lösungsmittel mit dem entsprechenden Druck für die HPLC-Analyse bereitzustellen. Diese beiden Pumpeneinheiten stehen in Verbindung zueinander, arbeiten aber unabhängig voneinander. Entsprechend wird auch der für die Analyse erforderliche Druck separat in dem jeweiligen Pumpenkopf aufgebaut. Beide Pumpeneinheiten weisen eine gemeinsame Ausgangsleitung auf. Die Ventile jeder der beiden Pumpeneinheiten werden so eingesetzt, daß sie entweder Lösungsmittel aus der einen Spritzpumpeneinheit oder aus der anderen Spritzpumpeneinheit über das Multipositionsventil in das Analysensystem injizieren. Die beiden genannten, separaten Pumpeneinheiten dienen dazu, die jeweils nicht mit dem Analysesystem verbundene Spritzkolbeneinheit sozusagen offline erneut zu befüllen und den für das Einspritzen erforderlichen Druck aufzubauen, so daß während eines Analysevorgangs keine Unterbrechung entsteht. Ist der jeweils erforderliche Druck aufgebaut, was über einen Drucksensor kontrolliert wird, wird das Lösungsmittel eingespritzt. Somit arbeitet dieses Spritzpumpensystem nicht pulsationsfrei.

Gemäß einem weiteren, durch die US 2005/214130 A1 bekanntgewordenen Stand der Technik wird ein Pumpensystem offenbart, das einerseits für die Nano-HPLC und andererseits für die Mikro-HPLC verwendbar und für die vollautomatische Trennung, Identifizierung und quantitative Analyse von Proteinen oder deren Reaktionsprodukten einsetzbar ist. Entsprechend können als Pumpe Spritzenpumpen (Nano-HPLC) oder Kolbenpumpen (Mikro-HPLC) eingesetzt werden. Es sind sechs bis acht Pumpen vorgesehen, jeweils für eine Mehrzahl von Lösungsmitteln, und eine Mehrzahl unterschiedlicher Säulen für die unterschiedlichen Anforderungen dieser Analysenmethode. Gemäß einer Ausführungsform dient ein Rückschlagventil im Auslaßbereich des Kolbens der jeweiligen Pumpe dazu, nach einem Kolbenhub für eine erneute Befüllung eine schnelle (Vor-) Komprimierung in dem Kolbenraum zu erreichen. Auch dieses Spritzenpumpensystem arbeitet nicht pulsationsfrei.

Außerdem offenbart die EP 1 524 520 A1 eine Einrichtung und ein Verfahren für die Zuführung eines Flüssigkeitsgradienten in der Nano-/Mikro-Flüssigkeitschromatographie, wobei das Mischen der Lösungsmittel optimiert werden soll. Dafür ist ein Einlaß, der gleichzeitig Auslaß sein kann, für ein zweites Lösungsmittel im Bereich einer Lösungsmittel-Dosier-Mischanlage in der Weise vorgesehen, daß gemäß einer Variante zunächst das zweite Lösungsmittel vorgelegt und vorkomprimiert wird. Alternativ wird das Lösungsmittel mit einer geringeren Kompressibilität vorgelegt und dann das zweite Lösungsmittel in der gewünschten Menge hinzugegeben. Ein pulsationsfreies Arbeiten ist nicht offenbart.

Durch die US 4,753,581 A ist eine Saugpumpe mit konstanter Förderleistung für die HPLC bekanntgeworden und damit eine Pumpe, die ein möglichst pulsationsfreies Fördern des Lösungsmittels gewährleisten soll. Die offenbarte Pumpe ist jedoch für den Gradientenbetrieb nicht geeignet.

Davon ausgehend liegt der Erfindung daher die Aufgabe zugrunde, ein Spritzpumpensystem für die HPLC bereitzustellen, welches im wesentlichen pulsationsfrei arbeitet, für den Gradientenbetrieb geeignet ist und auch bei sehr hohem Druck ein gewünschtes Gradientenprofil genau und reproduzierbar ausführt.

Gelöst wird diese Aufgabe durch ein Spritzenpumpensystem für die HPLC mit zumindest zwei Lösungsmitteln, bei dem zwei voneinander unabhängige Spritzenkolbenpumpen zu einem binären System gekoppelt sind, wobei jede Spritzenkolbenpumpe einen Pumpenkopf aufweist, der über jeweils eine Ausgangsverbindungsleitung und eine Ansaugleitung mit einem Multipositionsventil verbunden ist. Jedes Multipositionsventil weist jeweils eine weitere Ausgangsleitung auf, die über ein Verbindungsmittel in eine gemeinsame Ausgangsleitung mündet. Der für eine chromatographische Analyse erforderliche Druck ist für jedes der Lösungsmittel jeweils in dem Pumpenkopf über den Pumpenkolben aufgebaut. Der Pumpenkopf jeder der Spritzenkolbenpumpen ist des weiteren über eine Waschausgangsleitung mit dem genannten Multipositionsventil verbunden und die jeweilige Ausgangsverbindungsleitung ist mit einem passiven Pumpenausgangsventil versehen. Dadurch ist der für die chromatographische Analyse erforderliche Druck für jedes der Lösungsmittel aufgrund des passiven Pumpenausgangsventils jeweils separat in dem jeweiligen Pumpenkopf über den Pumpenkolben aufgebaut. Jeder der genannten Spritzenkolbenpumpen weist im übrigen einen Motor als Antrieb für den Pumpenkolben und als Kraftsensor für die Kompression des jeweiligen Lösungsmittels auf.

Erfindungsgemäss werden somit die für den Gradientenbetrieb benötigten unterschiedlichen Lösungsmittel durch die jeweiligen passiven Pumpenausgangsventile als passive Rückschlagventile unabhängig komprimiert, so daß die Lösungsmittelzusammenführung über das Verbindungsmittel, welches z.B. ein T-Stück sein kann, erst bei gleichem Druck erfolgt.
Bei dem erfindungsgemäßen Spritzenpumpensystem wird der Zieldruck durch eine Vorgabe mit höherer Förderleistung schnell erreicht.

Bevorzugt ist zusätzlich eine Regeleinheit vorgesehen, wobei der Motor zusammen mit der Regeleinheit Lufteinschlüsse, die Kompressibilität des Lösungsmittels und Undichtigkeiten erfaßt.

Die Erfindung betrifft auch ein Verfahren für das pulsationsfreie Fördern und genaue Mischen von zumindest zwei Lösungsmitteln für die HPLC im Gradientenbetrieb, bei dem in einem Spritzenpumpensystem mit zwei voneinander unabhängigen Spritzenkolbenpumpen jeder der Pumpenköpfe mit einem Multipositionsventil verbunden, mittels diesem über voneinander getrennte Leitungen gespült und verschlossen und über ein passives Pumpenausgangsventil betrieben wird, so daß der für den Gradientenbetrieb erforderliche Druckaufbau in dem jeweiligen Pumpenkopf und die Vermischung der Lösungsmittel erst bei Erreichen eines gleichen Drucks in einem Verbindungsmittel erfolgt.

Das Wechseln der Lösungsmittel sowie das Spülen der Spritzenpumpenköpfe erfolgt dabei durch getrennte Ein- und Ausgänge im Durchfluß über das Multipositions-Hochdruckventil, welches den Pumpenkopf verschließen und über das passive Pumpenausgangsventil oder Rückschlagventil öffnen kann. Das Multipositions-Hochdruckventil wird deshalb auch als aktives Multipositions-Hochdruckventil bezeichnet.

Vorzugsweise baut sich der Druck in den jeweiligen Spritzenkolbenpumpen synchron auf.

Des weiteren kann vorgesehen sein, daß die Kolben der Spritzenkolbenpumpen jeweils über einen Motor angetrieben werden, dessen Motorkraft separat gemessen wird, und daß sich der Lösungsmitteldruck in den Pumpenköpfen im wesentlichen proportional zu der Motorkraft verhält.

Der Antriebsmotor kann dabei als Kraftsensor dienen und noch eine hochauflösende Positionserkennung und Positionsregelung aufweisen.

Vorzugsweise werden die Spritzenkolbenpumpen für jede einzelne HPLC-Analyse neu initialisiert, so daß dadurch jeweils gleiche Startbedingungen für die Spritzenkolbenpumpen und chromatographische Analyse gegeben sind.

Die Erfindung betrifft des weiteren die Verwendung des Spritzenpumpensystems, wie zuvor beschrieben und des genannten Verfahrens in seinen unterschiedlichen Ausgestaltungen im Bereich der HPLC, der UHPLC sowie der Nano- und Mikro-HPLC.
Dabei sind Untersuchungen mit Gradienten und im wesentlichen pulsationsfreiem Fluß für HPLC-Säulen mit 2.1mm bis 150µm möglich.

Das erfindungsgemäße Spritzenpumpensystem in einer seiner Ausgestaltungen ist jedoch nicht nur für die Gradienten-Elution einsetzbar, sondern kann genauso für die isokratische Elution mit zwei voneinander unabhängigen isokratischen Pumpen und im continous flow-Modus eingesetzt werden.

Im folgenden soll die Erfindung anhand eines Ausführungsbeispiels unter Bezugnahme auf die Fig. der Zeichnung näher erläutert werden.

Es zeigen:
- Fig. 1:: Eine schematische Darstellung eines erfindungsgemäßen binären Spritzenkolbenpumpensystems,
- Fig. 2a:: einen Ausschnitt nach Fig. 1, der ein aktives Multiposidonsventil in einer Funktionsstellung zeigt für eine Ausstoßbewegung des Spritzenkolbens bei dem Spülvorgang des Pumpenkopfs,
- Fig. 2b:: einen Ausschnitt nach Fig. 1, der ein aktives Multipositionsventil in einer Funktionsstellung zeigt für eine Ansaugbewegung des Spritzenkolbens bei dem Spülvorgang des Pumpenkopfs,
- Fig. 2c:: einen Ausschnitt nach Fig. 1, der ein aktives Multipositionsventil in einer Funktionsstellung zeigt, in der der Pumpenkopf verschlossen ist, und
- Fig. 2d:: einen Ausschnitt nach Fig. 1, der ein aktives Multipositionsventil in einer Funktionsstellung zeigt, in der ein Lösungsmittel in eine Ausgangsverbindungsleitung und über ein Misch-T-Stück durch eine Ausgangsleitung gedrückt werden kann.

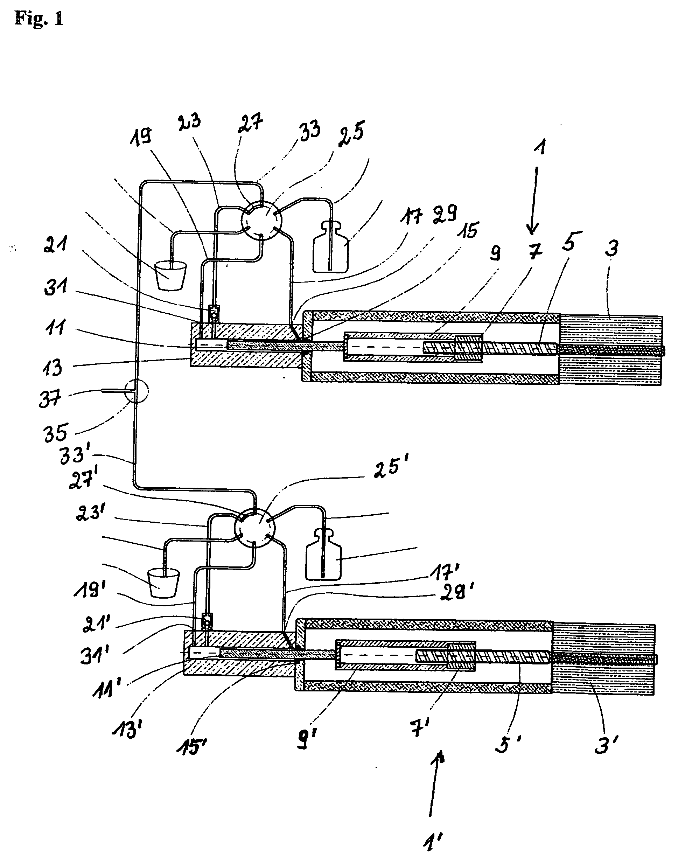

In Fig. 1 ist ein binäres Spritzenpumpen-System mit Spritzenkolbenpumpen dargestellt, daß für einen Gradientenbetrieb geeignet ist und zwei voneinander getrennte, unabhängige Pumpeneinheiten 1, 1' aufweist. Diese beiden Pumpeneinheiten 1, 1' weisen ihrerseits jeweils Antriebsmotoren, im folgenden kurz Motoren 3, 3' genannt, auf, mit einer Kugelumlaufspindel 5, 5', welche die jeweilige Motorachse bildet, und eine Kugelumlaufmutter 7, 7' mit einem Antriebsschlitten 9, 9' und einen Pumpenkolben 11, 11' in axialer Richtung bewegt.
Ein mit der Bezugsziffer 13, 13' bezeichneter Pumpenkopf ist mit Kolbendichtungen 15, 15' abgedichtet. Jeder der Pumpenköpfe 13, 13' ist jeweils über eine Ansaugleitung 17, 17', eine Waschausgangsleitung 19, 19', über ein passives Pumpenausgangsventil 21, 21' und eine Ausgangsverbindungsleitung 23, 23' mit einem Ventil verbunden, das im Rahmen der vorliegenden Erfindung als ein aktives Multipositionsventil 25, 25' bezeichnet ist.

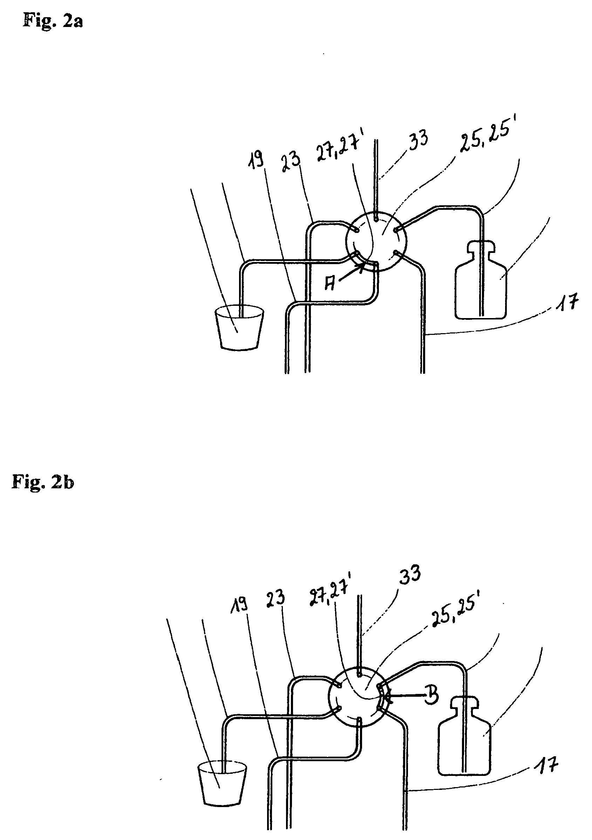

Dieses aktive Multipositionsventil 25, 25' ist als Ventil mit Rotor ausgebildet und weist vier mögliche Funktionsstellungen einer jeweiligen Verbindungsnut 27, 27' auf, welche in den Fig. 2a - 2d dargestellt sind und im folgenden erläutert werden. Dabei wird zunächst auf die Fig. 2a und 2b Bezug genommen, welche einen Spülvorgang des Pumpenkopfs 13, 13' beschreiben. Der Spülvorgang erfolgt zum einen durch eine Ausstoßbewegung des Pumpenkolbens 11, 11', bei welcher das Multipositionsventil 25 die Verbindungsnut 27 auf einer Position aktiviert, welche in Fig. 2a mit A bezeichnet ist, und zum anderen durch eine Ansaugbewegung des Pumpenkolbens 11, 11', bei welcher die Verbindungsnut 27 des Multipositionsventils 25 auf einer Position aktiviert ist, die Fig. 2b mit B bezeichnet. Hierfür sind an jedem der Pumpenköpfe 13, 13' ein Spülansauganschluß 29, 29' und ein Spülausstoßanschluß 31, 31' an den gegenüberliegenden Enden jedes der Pumpenköpfe 13, 13' angebracht. Dadurch werden diese beim Spülvorgang in einer Richtung durchflossen.

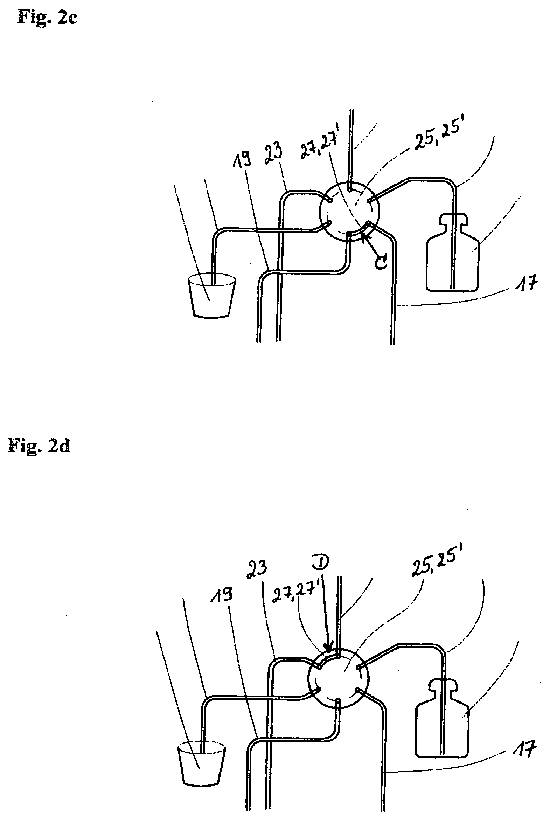

In Fig. 2c ist eine weitere Position dargestellt, in welcher die Verbindungsnut 27, 27' des Multipositionsventils 25, 25' sich befinden kann und die in Fig. 2c mit C bezeichnet ist. In dieser Stellung ist der Pumpenkopf 20, 20' verschlossen, und es werden nun mittels der Motorsteuerung und Kraftmessung von Motor 3, 3' ein möglicher Lufteinschluss, die Kompressibilität des Lösungsmittels sowie jeweils die Dichtigkeit der Kolbendichtung 15, 15', des Spülansauganschlusses 29, 29' und des Spülausstoßanschlusses 31, 31', der Ansaugleitung 17, 17', der Ausgangsverbindungsleitung 23, 23', der Waschausgangsleitung 19, 19', der Anschlüsse am passiven Pumpenausgangsventil 21, 21' und von dem Multipositionsventil 25, 25' erfaßt.
Der Motor 3, 3' dient auf diese Weise gleichzeitig als Kraftsensor, der zusammen mit einer Regeleinheit bei dem Verschluß des Pumpenkopfes 20, 20' in der Position C des Verbindungsnut 27, 27' des Multipositionsventils 25, 25' Lufteinschlüsse, die Kompressibilität und mögliche Undichtigkeiten erfaßt. Die Regeleinheit ist als hochauflösende Positionserkennung und Positionsregelung ausgebildet, was als solches nicht noch einmal gesondert dargestellt ist.

Erst wenn die Verbindungsnut 27, 27' des Multipositionsventils 25, 25' auf einer Position steht, wie sie in Fig. 2d mit D bezeichnet ist, kann bei positivem Kolbenhub das Lösungsmittel über das passives Pumpenausgangsventil 21, 21' der jeweiligen Ausgangsverbindungsleitung 23, 23' und einer jeweils weiteren Ausgangsleitung 33, 33' in ein Misch-T-Stück 35 und durch eine gemeinsame Ausgangsleitung 37 gedrückt werden.
Dabei muß je nach der verwendeten chromatographischen HPLC-Methode mit Drücken bis über 1000 bar auf der Ausgangsleitung 37 gerechnet werden. Über das passive Pumpenausgangsventil 21, 21' wird sichergestellt, daß bei einer unterschiedlichen Kompressibilität der jeweiligen verwendeten Lösungsmittel in den Pumpenköpfen 13, 13' die Lösungsmittel nur durch den jeweiligen Pumpenkolben 11, 11' komprimiert werden und die Vermischung der beiden Lösungsmittel erst bei Erreichen des gleichen Drucks im Misch-T-Stück 35 erfolgt. Die Zeit für das Erreichen der chromatographischen Startbedingungen ist abhängig vom Druck, dem Mischungsverhältnis, der Fließgeschwindigkeit sowie der Kompressibilität der unterschiedlichen Lösungsmittel. Daher wird sich der Druck in den Pumpenköpfen 13, 13' synchron aufbauen.

Erfindungsgemäß können die chromatographischen Startbedingungen wesentlich schneller und zuverlässiger erreicht werden, als dies herkömmlich im Stand der Technik möglich ist. Dies ist grundsätzlich dadurch bedingt, daß im Rahmen der vorliegenden Erfindung eine jeweils getrennte Motoren-Kraftmessung der Antriebsmotoren 3, 3' durchgeführt wird, wie oben erläutert. Hinzu kommt, daß sich außerdem bei dem erfindungsgemäßen Spritzenpumpensystem der Lösungsmitteldruck in den Pumpenköpfen 13, 13' weitgehend proportional zur Motorenkraft verhält. Auf diese Weise werden die chromatographischen Startbedingungen durch eine entsprechende Motorenregelung und eine Startdruckvorgabe wesentlich schneller erreicht.

Die für den Gradientenbetrieb in dem erfindungsgemäßen binären Spritzenpumpen-System benötigten unterschiedlichen Lösungsmittel werden mit Hilfe der passiven Pumpenausgangsventile 21, 21', welche als Rückschlagventile wirken, unabhängig voneinander in den beiden voneinander getrennten, unabhängigen Pumpeneinheiten 1,1' komprimiert, so daß die Zusammenführung der Lösungsmittel erst bei gleichem Druck erfolgt. Dabei wird der gewünschte Zieldruck durch eine Vorgabe mit höherer Förderleistung schnell erreicht.

Dadurch, daß jeder der Pumpenköpfe 13, 13' jeweils über eine Ansaugleitung 17, 17', eine Waschausgangsleitung 19, 19', über ein passives Pumpenausgangsventil 21, 21' und eine Ausgangsverbindungsleitung 23, 23' mit dem aktiven Multipositionsventil 25, 25' verbunden ist, kann das Ändern von Lösungsmitteln sowie das Spülen der Pumpenköpfe 13, 13' durch getrennte Ein- und Ausgänge im Durchfluß über das Multipositionsventil 25, 25' erfolgen, das auch als Multipositions-Hochdruckventil 25, 25' zu bezeichnen ist. Als aktiv ist es bezeichnet, weil es unter anderem den jeweils mit ihm in Verbindung stehenden Pumpenkopf 13, 13' verschließen und über das passive Rückschlagventil öffnen kann.

Aufgrund des erläuterten Aufbaus des erfindungsgemäßen binäres Spritzenpumpen-Systems, bei dem jeder einzelne Pumpenkopf 13, 13' mittels des aktiven Multipositionsventils 25, 25' über die genannten separaten Leitungen gespült, verschlossen und über das passive Pumpenausgangsventil 21, 21', das als Rückschlagventil ausgebildet ist, betrieben wird, sich außerdem der Spülansauganschluß und die Waschausgangsleitung 19, 19' als Ausgangsspülanschluß voneinander getrennt an dem jeweiligen Pumpenkopf 13, 13' befinden, und insgesamt der Druckaufbau in dem jeweiligen Pumpenkopf 13, 13' und nur mit dem Pumpenkolben 11, 11' erfolgen kann, wird ebenso erreicht, daß das System im wesentlichen pulsationsfrei arbeitet.

Zusätzlich können je nach gewünschter Ausführung die Pumpenköpfe 13, 13' des Spritzenpumpen-Systems thermisch stabilisiert werden. Es werden für die Pumpenköpfe 13, 13' Materialien verwendet, welche die gewünschten analytischen Resultate nicht verändern und dadurch verfälschen.
Insbesondere bei kleinen Förderleistungen ist es von Vorteil, wenn die Pumpenköpfe 13, 13' thermisch stabilisiert sind und die Druckleitungen und das Multipositionsvendl isoliert werden.

Es ist außerdem möglich, daß mehrere Pumpenausgänge gekoppelt werden, wobei das jeweilige Erreichen der chromatographischen Startbedingungen einer jeder Analyse oder eines jeden Analysenlaufs durch eine Regelcharakteristik erfolgt, bei der die Kraftsensorik jeder der Spritzenkolbenpumpen den Druckaufbau und die Fördergeschwindigkeit aller gekoppelten Pumpen miteinschließt.

## Patentansprüche

1. Spritzenpumpensystem für die HPLC mit zumindest zwei Lösungsmitteln, bei dem zwei voneinander unabhängige Spritzenkolbenpumpen zu einem binären System gekoppelt sind, wobei jede Spritzenkolbenpumpe einen Pumpenkopf (13, 13') aufweist, der über jeweils eine Ausgangsverbindungsleitung (23, 23') und eine Ansaugleitung (17, 17') mit einem Multipositionsventil (25, 25') verbunden ist, wobei jedes Multipositionsventil (25, 25') jeweils eine weitere Ausgangsleitung (33, 33') aufweist, die über ein Verbindungsmittel (35) in eine gemeinsame Ausgangsleitung (37) mündet, und der für eine chromatographische Analyse erforderliche Druck für jedes der Lösungsmittel jeweils in dem Pumpenkopf (13, 13') über den Pumpenkolben (11, 11') aufgebaut ist, **dadurch gekennzeichnet, daß** der Pumpenkopf (13, 13') jeder der Spritzenkolbenpumpen des weiteren über eine Waschausgangsleitung (19, 19') mit dem genannten Multipositionsventil (25, 25') verbunden und die jeweilige Ausgangsverbindungsleitung (23, 23') mit einem passiven Pumpenausgangsventil (21, 21') versehen ist, so daß der für die chromatographische Analyse erforderliche Druck für jedes der Lösungsmittel aufgrund des passiven Pumpenausgangsventils (21, 21') jeweils separat in dem jeweiligen Pumpenkopf (13, 13') über den Pumpenkolben (11, 11') aufgebaut ist, wobei jede der genannten Spritzenkolbenpumpen einen Motor (3, 3') als Antrieb für den Pumpenkolben (11, 11') und als Kraftsensor für die Kompression des jeweiligen Lösungsmittels aufweist.

2. Spritzenpumpensystem nach Anspruch 1, **dadurch gekennzeichnet, daß** zusätzlich eine Regeleinheit vorgesehen ist, und daß der Motor (3, 3') zusammen mit der Regeleinheit Lufteinschlüsse, die Kompressibilität des Lösungsmittels und Undichtigkeiten erfaßt.

3. Verfahren für das pulsationsfreie Fördern und genaue Mischen von zumindest zwei Lösungsmitteln für die HPLC im Gradientenbetrieb, bei dem in einem Spritzenpumpensystem mit zwei voneinander unabhängigen Spritzenkolbenpumpen jeder der Pumpenköpfe (13, 13') mit einem Multipositionsventil (25, 25') verbunden, mittels diesem über voneinander getrennte Leitungen gespült und verschlossen und über ein passives Pumpenausgangsventil (21, 21') betrieben wird, so daß der für den Gradientenbetrieb erforderliche Druckaufbau in dem jeweiligen Pumpenkopf (13, 13') erfolgt und die Vermischung der Lösungsmittel erst bei Erreichen eines gleichen Drucks in einem Verbindungsmittel erfolgt.

4. Verfahren nach Anspruch 3, **dadurch gekennzeichnet, daß** sich der Druck in den jeweiligen Spritzenkolbenpumpen synchron aufbaut.

5. Verfahren nach Anspruch 3 oder 4, **dadurch gekennzeichnet, daß** die Kolben (11, 11') der Spritzenkolbenpumpen jeweils über einen Motor (3, 3') angetrieben werden, dessen Motorkraft separat gemessen wird, und daß sich der Lösungsmitteldruck in den Pumpenköpfen (13, 13') im wesentlichen proportional zu der Motorkraft verhält.

6. Verfahren nach einem der Ansprüche 3 bis 5, **dadurch gekennzeichnet, daß** die Spritzenkolbenpumpen für jede einzelne HPLC-Analyse neu initialisiert und dadurch jeweils gleiche Startbedingungen für die Spritzenkolbenpumpen und chromatographische Analyse gegeben sind.

7. Verwendung des Spritzenpumpensystems nach Anspruch 1 oder 2 und des Verfahrens nach einem der Ansprüche 3 bis 6 im Bereich der HPLC, der UHPLC sowie der Nano- und Mikro-HPLC.

8. Verwendung des Spritzenpumpensystems nach Anspruch 1 oder 2 für die Gradienten-Elution, die isokratische Elution und im continous flow-Modus.

## Claims

1. Syringe pump system for HPLC with at least two solvents, where two independent syringe piston pumps are coupled to form a binary system; where each syringe piston pump has a pump head (13, 13'), which is connected to a multi-position valve (25, 25') via one outlet connecting pipe (23, 23') and one suction line (17, 17'); where each multi-position valve (25, 25') has an additional output pipe (33, 33') which opens via a connector (35) into a common output pipe (37); and where the pressure required for a chromatographic analysis for each of the solvents is built up in the pump head (13, 13') via the pump piston (11, 11');**characterised in that** the pump head (13, 13') of each of the syringe piston pumps is also connected to the said multi-position valve (25, 25') via a wash outlet pipe (19, 19'), and the respective outlet connecting pipe (23, 23') is fitted with a passive pump outlet valve (21, 21'), so that the pressure required for the chromatographic analysis for each of the solvents is built up separately in the respective pump head (13, 13') via the pump piston (11, 11'), thanks to the passive pump output valve (21, 21'); where each of the said syringe piston pumps is fitted with a motor (3, 3') as drive for the pump pistons (11, 11'), and as a force sensor for the compression of the respective solvent.

2. Syringe pump system according to Claim 1, **characterised in that** a control unit is also provided, and that the motor (3, 3') together with the control unit detects air bubbles, the compressibility of the solvent, and leaks.

3. Method for the pulsation-free conveying and precise mixing of at least two solvents for HPLC in gradient operation, in which in a syringe pump system with two independent syringe piston pumps each of the pump heads (13, 13') are connected with a multi-position valve (25, 25'), and by means of this are rinsed and sealed off via separate pipes and operated via a passive pump outlet valve (21, 21'), so the build-up of pressure that is required for gradient operation takes place in the respective pump head (13, 13'), and the mixing of the solvents only takes place on reaching an equal pressure in a connector.

4. Method according to Claim 3, **characterised in that** the pressure in the respective syringe piston pump builds up synchronously.

5. Method according to Claim 3 or 4, **characterised in that** the pistons (11, 11') of the syringe piston pumps are each driven by a motor (3, 3'), and the force of these motors is measured separately, and the solvent pressure in the pump heads (13, 13') is basically proportional to the motor force.

6. Method according to one of the Claims 3 to 5, **characterised in that** the syringe piston pumps are re-initialised for each individual HPLC analysis, so that the same starting conditions for the syringe piston pumps and chromatographic analysis are given in each case.

7. Use of the syringe pump system of Claim 1 or 2 and the method according to one of the Claims 3 to 6 in the area of HPLC, UHPLC and nano-HPLC and micro-HPLC.

8. Use of the syringe pump system of Claim 1 or 2 for gradient elution, isocratic elution and in continuous flow mode.

## Revendications

1. Système de pompes seringues pour HPLC avec au moins deux solvants, dans lequel sont couplées deux pompes seringues à pistons indépendantes l'une de l'autre pour un système binaire, chaque pompe seringue à piston comportant une tête de pompe (13, 13'), laquelle est reliée par l'intermédiaire respectivement d'une ligne de raccordement de sortie (23, 23') et d'une ligne d'entrée (17, 17') à une vanne à multiples positions (25, 25'), chaque vanne à multiples positions (25, 25') comportant respectivement une autre ligne de sortie (33, 33'), laquelle débouche par l'intermédiaire d'un moyen de jonction (35) dans une ligne de sortie commune (37), et la pression requise pour une analyse chromatographique étant établie pour chacun des solvants respectivement dans la tête de pompe (13, 13') par le biais du piston de pompe (11, 11'), **caractérisé en ce que** la tête de pompe (13, 13') de chacune des pompes seringues à pistons est en outre reliée par l'intermédiaire d'une ligne de sortie de lavage (19, 19') à ladite vanne à multiples positions (25, 25') et la ligne de raccordement de sortie respective (23, 23') est équipée d'un clapet de sortie de pompe passif (21, 21'), de sorte que la pression requise pour l'analyse chromatographique est établie séparément pour chacun des solvants grâce au clapet de sortie de pompe passif (21, 21') dans la tête de pompe respective (13, 13') par le biais du piston de pompe (11, 11'), chacune desdites pompes seringues à pistons comportant un moteur électrique (3, 3') en tant qu'entraînement pour le piston de pompe (11, 11') et en tant que capteur de force pour la compression du solvant respectif.

2. Système de pompes seringues selon la revendication 1, **caractérisé en ce qu'**une unité de réglage est en outre prévue, et **en ce que** le moteur (3,3') détecte en association avec l'unité de réglage les inclusions d'air, la compressibilité du solvant et les fuites.

3. Procédé pour l'acheminement sans pulsations et un mélange précis d'au moins deux solvants pour HPLC pour un fonctionnement avec des gradients, dans lequel dans un système de pompes seringues avec deux pompes seringues à pistons indépendantes l'une de l'autre, chacune des têtes de pompes (13, 13') est reliée à une vanne à multiples positions (25, 25'), grâce à laquelle chaque tête de pompe sera remplie et fermée par l'intermédiaire de lignes séparées et sera actionnée par l'intermédiaire d'un clapet de sortie de pompe passif (21, 21'), de sorte que la mise en pression requise pour le fonctionnement avec des gradients se fait dans chaque tête de pompe respective (13, 13') et le mélange des solvants ne se fait que si une pression identique est atteinte dans un moyen de jonction.

4. Procédé selon la revendication 3, **caractérisé en ce que** la pression dans les pompes seringues à pistons respectives s'établit de manière synchrone.

5. Procédé selon la revendication 3 ou 4, **caractérisé en ce que** les pistons (11, 11') des pompes seringues à pistons sont actionnés respectivement par l'intermédiaire d'un moteur électrique (3, 3'), dont la force de moteur est mesurée de manière séparée, et **en ce que** la pression de solvant dans les têtes de pompes (13, 13') se comporte de manière sensiblement proportionnelle à la force de moteur.

6. Procédé selon l'une des revendications 3 à 5, **caractérisé en ce que** les pompes seringues à pistons sont réinitialisées pour chaque analyse HPLC individuelle et **en ce que** les mêmes conditions de démarrage sont respectivement données pour les pompes seringues à pistons et l'analyse chromatographique.

7. Utilisation du système de pompes seringues selon la revendication 1 ou 2 et du procédé selon l'une des revendications 3 à 6 dans le domaine de la HPLC, de l'UHPLC ainsi que de la micro-HPLC et de la nano-HPLC.

8. Utilisation du système de pompes seringues selon la revendication 1 ou 2 pour l'élution par gradients, l'élution isocratique et dans le mode d'écoulement continu.
